# EUROPÄISCHE PATENTSCHRIFT

(11) **EP 0 879 129 B1**
(45) Veröffentlichungstag und Bekanntmachung des Hinweises auf die Patenterteilung: **07.03.2001**
(21) Anmeldenummer: 97904387.4
(22) Anmeldetag: 06.02.1997
(51) Int. Cl.: B29C 47/10

(54) **VERFAHREN ZUR HERSTELLUNG EINER FÜLLSTOFFHALTIGEN BIAXIAL ORIENTIERTEN POLYMERFOLIE**
PROCESS FOR PRODUCING A FILLER-CONTAINING BIAXIALLY ORIENTED POLYMER FOIL
PROCEDE DE PRODUCTION D'UN FILM POLYMERE A ORIENTATION BIAXIALE CONTENANT UNE CHARGE

(30) Priorität: 08.02.1996 DE 19604637
(43) Veröffentlichungstag der Anmeldung: 25.11.1998
(73) Patentinhaber: Brückner Maschinenbau GmbH, 83313 Siegsdorf (DE)
(72) Erfinder: SAHR, Ulrich, D-83278 Traunstein (DE); SCHWUCHOW, Rainer, D-83355 Grabenstätt (DE)
(74) Vertreter: Flach, Dieter Dipl.-Phys.
(86) Internationale Anmeldenummer: EP9700544
(87) Internationale Veröffentlichungsnummer: WO9728948

(56) Entgegenhaltungen:
- EP-A- 0 220 433
- US-A- 5 044 757
- PLASTVERARBEITER, Bd. 46, Nr. 4, 1.April 1995, Seiten 18/19, 22-24, XP000510874 BERGHAUS U: "DIREKTEXTRUSION AUFBEREITEN UND VERARBEITEN IN EINEM SCHRITT, TEIL 2"
- PE PLAST EUROPE, Nr. 1, 1.April 1993, Seiten 48-52, XP000362618 KURRER H: "DIRECT EXTRUSION OF FILLED POLYOLEFINS"
- PLASTICS ENGINEERING, Bd. 47, Nr. 12, 1.Dezember 1991, Seiten 39-42, XP000248773 MACK M H: "CONTINUOUS COMPOUNDING OF COLOR MASTERBATCHES"
- PLASTVERARBEITER, Bd. 46, Nr. 3, 1995, Seiten 82-84, XP002030203 BERGHAUS U.: "DIREKTEXTRUSION: AUFBEREITEN UND VERARBEITEN IN EINEM SCHRITT, TEIL 1"

## Beschreibung

Die vorliegende Erfindung betrifft ein Verfahren zur Herstellung einer ein- oder mehrlagigen biaxial orientierten Folie aus einem kristallisierbaren thermoplastischen Polymeren, die wenigstens eine füllstoffhaltige Lage aufweist.

Ein- oder mehrlagige biaxial orientierte Folien aus einem kristallisierbaren thermoplastischen Polymeren, z.B. Polypropylen, die Füllstoffe wie Calciumcarbonat und Pigmente wie Titandioxid in der Folie oder wenigstens einer Lage der Folie enthalten, sind dem Fachmann aus der Praxis sowie zahlreichen Veröffentlichungen in Form von Prospekten, Zeitschriftenartikeln und gewerblichen Schutzrechten gut bekannt.

Derartige Verfahren umfassen die folgenden Grundschritte:

Man bereitet wenigstens eine Schmelze aus einem homogenen Gemisch eines thermoplastischen Polymeren mit einem oder mehreren Füllstoffen (einschließlich Pigmenten) sowie ggf. weiteren üblichen Additiven, wobei die Schmelze ein solches Gewichtsverhältnis von thermoplastischem Polymer zu dem oder den Füllstoffen aufweist, wie es im Hinblick auf die beabsichtigte Endverwendung für die füllstoffhaltige Polymerfolie oder Lage einer mehrschichtigen Polymerfolie vorgesehen ist.

Die homogenisierte und entgaste füllstoffhaltige Polymerschmelze wird im Falle einer einlagigen einfachen Folie durch eine Breitschlitzdüse extrudiert, wobei die aus der Breitschlitzdüse extrudierte Schmelze unter Bildung einer einschichtigen Vorfolie durch Abkühlen verfestigt wird. Dabei wird die flache Schmelze mittels einer geeigneten Vorrichtung (z.B. Luftrakel) an eine Kühlwalze gedrückt und durch ein Wasserbad gezogen, um die Vorfolie herzustellen. Durch eine geeignete Temperaturführung wird diese anschließend auf den erforderlichen Kristallisationsgrad und eine geeignete Temperatur für die nachfolgende Verstreckung gebracht. Im Falle mehrlagiger Folien sind eine oder mehrere Breitschlitzdüsen vorgesehen, die benachbart oder auch an unterschiedlichen Orten der Anlage angeordnet sein können, z.B. kann eine weitere Düse für die Aufbringung einer Deckschicht auch zwischen Längs- und Querversteckung angeordnet sein, durch die verschiedene Schmelzen für die Bildung weiterer Folienlagen extrudiert werden, wobei diese weiteren Folienlagen füllstoffhaltig oder auch füllstofffrei sein können.

Die ein- oder mehrschichtige Vorfolie wird dann auf an sich bekannte Weise in Längs- und Querrichtung unter Bildung einer ein- oder mehrlagigen biaxial orientierten Polymerfolie verstreckt. Die Verstreckung erfolgt in der Regel stufenweise, und zwischen der Längs- und der Querverstreckung wird die Folie intermediär thermofixiert. Auch die fertig verstreckte Folie wird nach dem Verstrecken in Querrichtung im Breitstreckofen wieder thermofixiert und nach üblichen Zurichtungsschritten aufgewickelt. Die Zurichtungsschritte umfassen in der Regel das Abschneiden des unverstreckten Randes der Folie, der von den Kluppen des Streckrahmens gehalten wurde, die Messung der Dicke der Folie, und ggf. eine Oberflächenbehandlung mittels Corona- oder Flammbehandlung, um die Oberfläche der Folie bedruckbar zu machen. Es ist selbstverständlich auch möglich, die gereckte ein- oder mehrschichtige Folie noch mit anderen Folien zu kaschieren oder noch zusätzliche Deckschichten aufzubringen.

Ergänzend kann bezüglich des bekannten Grundverfahrens zum Stand der Technik bezug genommen werden z.B. auf die europäischen Patente EP 0 004 633 B2, EP 0 220 433 B1, die FR-A-2 276 349 und die darin als Stand der Technik zitierten Literaturstellen.

Im Rahmen der vorliegenden Erfindung sind die Polymeren die auf dem Fachgebiet bekannten üblichen thermoplastischen kristallisierbaren, d.h. durch biaxiale Verstreckung orientierbaren, Polymeren, wobei Polypropylen in Form eines isotaktischen homopolymeren Polypropylen oder eines Propylen-Copolymeren mit bis zu 15 Gew.-% an Ethylen und/oder anderen alpha-Olefinen mit von 4 bis 8 Kohlenstoffatomen bevorzugt ist. Der Begriff "Füllstoffe" umfaßt im Rahmen der vorliegenden Anmeldung auch Pigmente. Die Füllstoffe können irgendwelche auf dem Fachgebiet bekannte Füllstoffe und/oder Pigmente sein, die in der Regel anorganische Substanzen sind. Besonders verbreitete Füllstoffe/Pigmente sind Calciumcarbonat, Titandioxid, Kaolin, Talk, Bariumsulfat, Zinksulfid und Gemische davon. Besonders bevorzugt sind Gemische von Calciumcarbonat und Titandioxid.

Die pulverförmigen Füllstoffe, einschließlich der Pigmente, können oberflächlich vorbehandelt sein. Sie können z.B. durch Imprägnieren mit einem Haftvermittler mit der Polymerschmelze verträglicher gemacht worden sein, oder so vorbehandelt sein, daß die z.B. Fließfähigkeit der pulverförmigen Füllstoffe und/oder deren Verteilung in einer Polymerschmelze verbessert wird.

Um qualitativ hochwertige biaxial verstreckte füllstoffhaltige Polymerfolien zu erhalten, muß die füllstoffhaltige Polymerschmelze homogen und blasenfrei sein. Das derzeit zur Schmelzebereitung üblichste Verfahren ist beschrieben in der EP 0 220 433 B1 und besteht darin, daß man Granulate aus füllstofffreien Polymeren mit füllstoffhaltigen "Masterbatch"-Granulaten mit einem relativ hohen Füllstoffgehalt vermischt und gemeinsam aufschmilzt. Aufgrund der Vorbenetzung der Füllstoffe durch das Polymer im Masterbatch-Granulat wird eine gute Vermischung erreicht, und das relativ grobe Granulat ermöglicht eine gute Entlüftung der Schmelze.

In der EP 0 220 433 B1 wird beschrieben, daß vor der Einführung des geschilderten Verfahrens üblicherweise so vorgegangen wurde, daß man das Polymer für die mit Füllstoffen versehene Schicht in einem gesonderten Schritt bei der Rohstoffherstellung einzeln mit den gewünschten Gewichtsmengen an Füllstoffen ausrüstete und anschließend bei der Folienherstellung ein einheitliches Granulat mit dem End-Füllstoffgehalt einsetzte. Dieses Verfahren hatte den Nachteil, im Hinblick auf Rezepturmodifikationen sehr unflexibel zu sein und wurde daher in der Praxis durch die an sich seit langem bekannte Masterbatch-Technik verdrängt.

Die für die Masterbatch-Technik erforderliche Herstellung von Masterbatch-Granulaten mit einem hohen Füllstoffgehalt (Füllstoffgehalt von mehr als 30 Gew.-%, vorzugsweise mehr als 40 Gew.-%) erfolgt dabei in der Regel unter Verwendung einer Direktzugabe von Pulver zum Polymeren in Zweischneckenextrudern. Bei der Masterbatch-Herstellung ist es nicht erforderlich, eine Mischungshomogenität und Blasenfreiheit zu erreichen, wie sie für die Folienherstellung erforderlich ist, da die endgültige Homogenisierung und Entgasung der Schmelze vor der Folienherstellung bei der Schmelzenbereitung aus Masterbatch und zusätzlichem reinem Polymeren erfolgt.

Der geschilderte Stand der Technik weist den Nachteil auf, daß das Polymer bei der gesonderten Masterbatch-Herstellung vor der nachfolgenden Schmelzebereitung und Extrusion zweimal thermisch belastet wird und daß das Masterbatch-Granulat gesondert hergestellt bzw. von Herstellern vorgefertigt bezogen werden muß. Außerdem sind dem endgültigen Füllstoffgehalt Obergrenzen gesetzt.

Der vorliegenden Erfindung liegt die Aufgabe zugrunde, unter Vermeidung der Standes der Technik ein Verfahren zur Herstellung von ein- oder mehrlagigen biaxial orientierten Folien aus thermoplastischen Polymeren zu schaffen, das materialschonend und flexibel ist und eine kostengünstige und effiziente Herstellung ein- oder mehrlagiger füllstoffhaltiger opaker Folien ermöglicht.

Diese Aufgabe wird bei einem Verfahren gemäß Oberbegriff von Anspruch 1 dadurch gelöst, daß man die füllstoffhaltige Schmelze dadurch herstellt, daß man in einem Extruder eine füllstofffreie Schmelze des Polymeren herstellt und dieser Schmelze den oder die pulverförmigen Füllstoff(e) während der Förderung der Schmelze im Extruder zusetzt.

Vorteilhafte Ausgestaltungen eines solchen Verfahrens sind in den Unteransprüchen 2 bis 6 beschrieben. Es hat sich dabei insbesondere bei höheren Füllstoffgehalten als erforderlich erwiesen hat, den pulverförmigen Füllstoff dem Schmelzenstrom in einem Zweischneckenextruder zuzusetzen, und zwar durch Zugabe zu einem Bereich, in dem die vorher erzeugte Polymerschmelze drucklos gefördert wird. Zwischen Zugabe- und Extrusionsstelle erfolgt dann noch eine ausreichende Benetzung, Homogenisierung und Entgasung des Gemischs von Polymerschmelze und Füllstoff.

Gewisse Nachteile aufgrund eines erhöhten Aufwands im Rohstoffhandling und im Hinblick auf eine Staubgefahr bei Einsatz pulverförmiger Füllstoffe wird durch die obigen Vorteile der materialschonenden Herstellung in einem Arbeitsgang aufgewogen.

Nachfolgend wird das erfindungsgemäße Verfahren noch näher erläutert:

Zur Herstellung von füllstoffhaltigen Folien oder füllstoffhaltigen Folienlagen mit einem Füllstoff und/oder Pigmentgehalt werden die pulverförmigen Füllstoffe und Pigmente (insbesondere anorganische Materialien wie Calciumcarbonat und Titandioxid) durch geeignete Dosiereinrichtungen (z.B. Differentialdosierwaagen mit Austragsschnecken oder -rinnen) demjenigen Extruder, der die füllstoffhaltige opake Schicht extrudiert, zugegeben. Für die Homogenisierung und Extrusion können Einschneckenextruder oder Zweischneckenextruder eingesetzt werden.

Bei höheren Füllstoff- und Pigmentgehalten bis zu 80 Gew.-%, bezogen auf das Gesamtgemisch, hat es sich als erforderlich erwiesen, mit Zweischneckextrudern zu arbeiten und die Füllstoffe und Pigmente direkt in den Schmelzestrom im Extruder einzuführen. Diese Verfahrensvariante weist besondere Vorteile für Füllstoff- und Pigmentgehalte von 20 bis 80 Gew.-% auf.

Die Zugabe der Füllstoffe zum Schmelzestrom erfolgt so, daß im Einzug des Extruders nur das Polymer ohne Füllstoffe und Pigmente zugegeben und dann im Einzugsteil der Schnecken aufgeschmolzen wird. Wenn das Polymer schmelzflüssig ist, wird der Füllstoff mittels geeigneter Vorrichtungen (z.B. Doppelschnecken zum Pulverfördern) direkt in den Schmelzestrom gedrückt. Die Zugabemengen pro Zugabe liegen vorteilhaft im Bereich bis 40 Gew.-%, bezogen auf das Gesamtgemisch. Die Schneckengeometrie des Zweischneckenextruders ist so gestaltet, daß in der Zugabezone des Pulvers der Schmelzestrom drucklos gefördert wird. Das aufgeschmolzene Polymer wird im Extruder mit dem zudosierten Füllstoffgemisch homogenisiert. In das homogenisierte Gemisch kann zur Erhöhung des Füllstoffgehalts mittels einer weiteren Füllstoff/Pigmenteinspeisung zusätzliches Pulver in das vorher homogenisierte füllstoffhaltige Gemisch (aufgeschmolzenes Polymer) , das bereits bis zu 40 Gew.-% Füllstoff enthält, eingebracht werden. Auch auf dieser Stufe können noch einmal bis zu 40 Gew.-% Füllstoff/Pigment zugesetzt werden, so daß sehr hohe Füllstoffgehalte erreichbar sind. Nach vollständiger Zugabe der gewünschten Füllstoff-/Pigmentmengen wird das Gemisch im letzten (vorderen Teil) des Zweischneckenextruders endgültig homogenisiert.

Zur Folienherstellung wird das aus dem Extruder erhaltene Füllstoff-/Pigment-Polymergemisch vorzugsweise noch einmal mittels einer Schmelzepumpe, die dem Zweischneckenextruder nachgeschaltet ist, durch einen Schmelzefilter gedrückt und erst dann der jeweiligen Düse zugeführt. Die weitere Herstellung der biaxial gereckten Folie durch intermediäre Herstellung einer Vorfolie und deren nachgeschaltetes biaxialem Recken erfolgt auf an sich bekannte Weise nach dem eingangs zusammengefaßten Stand der Technik.

Nachfolgend wird das erfindungsgemäße Verfahren anhand eines Ausführungsbeispiels noch näher erläutert.

### Beispiel

Nach dem erfindungsgemäßen Verfahren der Direktzugabe von thermoplastischem Polymer und Füllstoffen zu einem Folienextruder wurden dreischichtige biaxial orientierte Polypropylenfolien hergestellt, bei denen eine füllstoffhaltige Polypropylenkernschicht zwischen zwei Deckschichten aus einem füllstofffreien Polypropylen angeordnet war, wobei für alle drei Schichten das gleiche Polypropylenhandelsprodukt verwendet wurde.

Als Polypropylenausgangsmaterial wurde ein Polypropylen-Homopolymer mit einem MFR-Wert (MFR = melt flow rate bei 230°C/2,16 kg) von 3,0 verwendet (Bezugsquelle: Montell; Typ KF 6190 H).

Für die füllstoffhaltige Kernschicht wurde oberflächenbehandeltes Calciumcarbonat in zwei unterschiedlichen Qualitäten mit mittleren Korngrößen von 2,0 µm einerseits und 2,4 µm andererseits verwendet (Lieferant: Firma Omya; Typ EX-H1; mittlere Korngröße 2,0 µm; Typ BSH; mittlere Korngröße 2,4 µm).

Die Folien wurden auf einer Laboranlage mit einer Dreilagendüse einer Breite von 260 mm, einer Chill Roll mit einem Durchmesser von 400 mm mit einem niedrigen Wasserbad und einer Luftmesseranlegung der Schmelze, einem Streckwerk für die biaxialen Orientierung der Folie durch aufeinanderfolgende Streckung zuerst in Längsrichtung (MDO; sechs Vorheizwalzen, sechs Streckwalzen, vier Weiterheizwalzen) und dann in Querrichtung (TDO; 2 m Vorheizzone, 2 m Streckzone, 2 m Weiterheizzone, 0,75 m Kühlzone) sowie einem üblichen Abzugsständer mit Randbeschnitt und einem Dickenmeßgerät und einem Wickler hergestellt.

Zur Durchführung des erfindungsgemäßen Verfahrens wurde der Extruder für die Herstellung der füllstoffhaltigen Polypropylenschmelze und deren Homogenisierung und Entgasung wie folgt ausgewählt:

Als Extruder wurde ein gleichsinnig drehender Zweischneckenextruder mit einem Durchmesser der Schnecken von 43 mm und einem Verhältnis von Länge/Durchmesser von 28 verwendet, der eine Zufütteröffnung für Pulver in den Schmelzestrom im Extruder und eine Vakuumentgasung aufwies.

Zwischen dem Extruder und der Dreilagendüse war eine Schmelzepumpe mit einem Schmelzefilter mit 60 mm Durchmesser mit einer Filterfeinheit von 450 µm angeordnet.

### Herstellung der Versuchsfolien:

Bei allen Versuchslots blieben die Extrusions- und Verstreckbedingungen gleich. Durch die nachfolgend beschriebenen unterschiedlichen Zugabemengen und Qualitäten des Calciumcarbonats wurde eine unterschiedliche Vakuolenbindung in der Kernschicht erhalten, was insgesamt eine Änderung der Foliendichte und auch der Foliendicke bewirkt.

Dem Extruder für die Deckschichten wurde jeweils reines Polypropylen-Homopolymer KF 6190 H zugeführt.

Für die Kernschicht wurde das Polypropylen-Homopolymer KF 6190 H in Form eines Granulats in mit einer gravimetrischen Dosierwaage abgemessenen Gewichtsmengen und unter dem Eigengewicht dem Einzug des Zweischneckenextruders zugeführt. Stromab des genannten Einzugs wurde das Füllstoffpulver (Calciumcarbonat-pulver) ebenfalls gravimetrisch der oben liegenden Zufütteröffnung des Extruders an einer Stelle zudosiert, an der das Polypropylen im Extruder aufgeschmolzen und aufgrund der Schneckenkonfiguration drucklos gemacht war. Das auf diese Weise zugeführte Füllstoffpulver wurde während der Förderung im Extruder bis zur nachgeschalteten Vakuumentgasung homogen mit der Polypropylenschmelze vermischt und homogenisiert. Die Vakuumentgasung arbeitete bei einem Druck von 1 mbar. Das Filtersieb des dem Extruder nachgeordneten Schmelzefilters war bewußt so groß gewählt worden, daß er nicht zur Homogenisierung beitrug, sondern nur grobe Verschmutzungen ausfilterte. Es wurde während des gesamten Versuchstages kein verschmutzungsbedingter Druckanstieg vor dem Filter verzeichnet.

Die Schmelzetemperaturen lagen bei den verschiedenen Versuchen an der Spitze des Zweischneckenextruders im Bereich von 256°C bis 262°C. Der Ausstoß wurde im Bereich von 82 kg/h bis 98 kg/h variiert. Die aufgrund des in der Kernschicht vorhandenen Calciumcarbonats weißlich/trübe Schmelze aus der Dreilagendüse wurde auf die Kühlwalze (Chill Roll) gegossen und mit einem Luftmesser angedrückt, dann auf bekannte Weise durch das Wasserbad gezogen und unter die Kristallisationstemperatur abgekühlt.

Anschließend wurde die Gießfolie auf an sich bekannte Weise auf Strecktemperatur aufgeheizt und in Längsrichtung (MDO-Richtung) um das Fünffache gestreckt. Auf den folgenden Weiterheizwalzen relaxierte der längsgestreckte Film, und lief dann in die Breitstreckmaschine ein, wo die Folie in geeigneter Weise für das Breitrecken aufgeheizt und dann um das 9,2-fache breitgestreckt wurde, woran sich eine bekannte Relaxierung anschloß.

Es wurden verschiedene Folienrezepturen untersucht, bei denen als Füllstoffe unterschiedliche Mengen zweier unterschiedlicher Calciumcarbonatqualitäten (mittlere Teilchendurchmesser von 2,0 um bzw. 2,4 um) in der Kernschicht verwendet wurden.

Die Rezepturen für die einzelnen Versuchslots finden sich in der nachfolgenden Tabelle 1.

Die Eigenschaften der aus diesen Versuchslots unter den geschilderten Bedingungen erhaltenen Folien sind in der nachfolgenden Tabelle 2 zusammengefaßt.

Alle hergestellten Folien waren fehlerfrei und optisch gleichmäßig. Das Dickenprofil war bei allen Folien sehr gut. Wie den Ergebnissen in Tabelle 2 zu entnehmen ist, wiesen alle Folien gute bis sehr gute Ergebnisse bezüglich Optik und Festigkeit auf, und über die Zugabemenge an Calciumcarbonatfüllstoff kann die Dichte der Folie direkt beeinflußt werden. Die aus Lot 1/1 erhaltene Folie mit einer Dichte von 0,75 g/cm³, die nach dem erfindungsgemäßen direkten Inline-Pulverzugabeverfahren hergestellt war, entsprach in ihrer Qualität einer marktüblichen Folie mit Perleffekt ("pearlized").

Das Ausführungsbeispiel belegt die Herstellung von Qualitätsfolien mit Calciumcarbonat-Füllstoffmengen von 5 bis 20% mit einer Freifall-Dosierung von Calciumcarbonat-Pulver in den Zweischneckenextruder.

Wird die gravimetrische Freifall-Förderung des Füllstoffs durch eine zwangsgeförderte Pulvereinspeisung ersetzt, lassen sich die Füllstoffmengen erheblich erhöhen.

**Tabelle 1**

| Rezepturen für die Filmherstellung | | | | |
|---|---|---|---|---|
| | | PP-Homopolymer | CaCo₃-Füllstoff | |
| | | | ø 2.0 µm | ø 2.4 µm |
| | EB | 100 | | |
| Lot 1/1 div. | EE | 95 | 5 | |
| | EB | 100 | | |
| | | | | |
| | EB | 100 | | |
| Lot 1/2 div. | EE | 90 | 10 | |
| | EB | 100 | | |
| | | | | |
| | EB | 100 | | |
| Lot 1/3 div. | EE | 80 | 20 | |
| | EB | 100 | | |
| | | | | |
| | EB | 100 | | |
| Lot 2/1 div. | EE | 80 | | 20 |
| | EB | 100 | | |
| | | | | |
| | EB | 100 | | |
| Lot 2/2 div. | EE | 95 | | 5 |
| | EB | 100 | | |
| | | | | |
| | EB | 100 | | |
| Lot 2/3 div. | EE | 95 | | 5 |
| | EB | 100 | | |

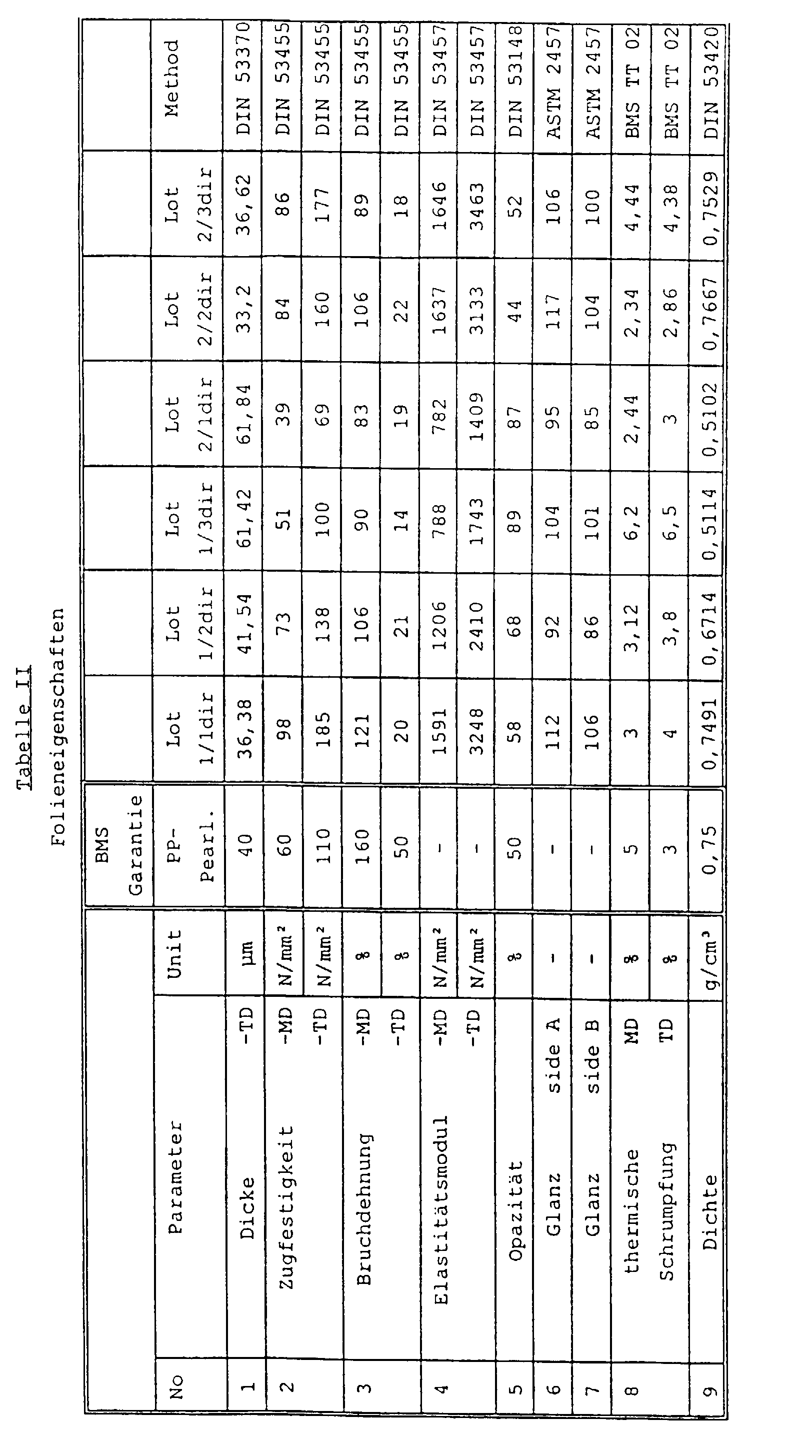

## Patentansprüche

1. Verfahren zur Herstellung einer ein- oder mehrlagigen biaxial orientierten Folie aus einem kristallisierbaren thermoplastischen Polymer, die wenigstens eine füllstoffhaltige Lage aufweist, bei dem man
- wenigstens eine Schmelze aus einem homogenen Gemisch des thermoplastischen Polymeren mit einem oder mehreren Füllstoffen sowie ggf. weiteren üblichen Additiven herstellt, die ein solches Gewichtsverhältnis von thermoplastischem Polymer zu Füllstoff(en) aufweist, wie es für die füllstoffhaltige Polymerfolie oder die Lage einer mehrschichtigen Polymerfolie vorgesehen ist,
- die Schmelze durch eine Breitschlitzdüse unter Bildung einer einschichtigen Vorfolie oder einer Schichtlage für eine mehrschichtige Vorfolie extrudiert,
- die ein- oder mehrschichtige Vorfolie durch Abkühlen verfestigt und sie auf den für die nachfolgende Verstreckung erforderlichen Kristallisationsgrad und eine für das Verstrecken geeignete Temperatur bringt
- und diese Vorfolie dann auf an sich bekannte Weise in Längs- und Querrichtung unter Bildung einer ein- oder mehrlagigen biaxial orientierten Polymerfolie verstreckt, diese thermofixiert und aufwickelt,
**dadurch gekennzeichnet**, daß man die füllstoffhaltige Schmelze dadurch herstellt, daß man in einem Extruder eine füllstofffreie Schmelze des Polymeren herstellt und dieser Schmelze den oder die pulverförmigen Füllstoff(e) während der Förderung der Schmelze im Extruder zusetzt.

2. Verfahren nach Anspruch 1, dadurch gekennzeichnet, daß man die füllstoffhaltige Schmelze unter Verwendung eines Zweischneckenextruders homogenisiert und extrudiert.

3. Verfahren nach Anspruch 1 und 2, dadurch gekennzeichnet, daß man den oder die pulverförmigen Füllstoff(e) der Polymerschmelze mittels eines Pulverförderers einer Zugabezone eines Zweischneckenextruders zusetzt, in der die Polymerschmelze drucklos gefördert wird.

4. Verfahren nach einem der vorangehenden Ansprüche, dadurch gekennzeichnet, daß das Polymer ausgewählt ist aus kristallisierbaren Polypropylen-Homopolymeren oder Polypropylen-Copolymeren mit einem Anteil von bis zu 15 Gew.-% an Ethylen oder alpha-Olefinen mit von 4 bis 8 Kohlenstoffatomen.

5. Verfahren nach einem der Ansprüche 1 bis 4, dadurch gekennzeichnet, daß die Füllstoffe ausgewählt sind aus einer Gruppe, die die anorganischen Füllstoffe und Pigmente Calciumcarbonat, Titandioxid, Kaolin, Talk, Bariumsulfat, Zinksulfid oder Gemische davon umfaßt.

6. Verfahren nach einem der Ansprüche 1 bis 5, dadurch gekennzeichnet, daß der Füllstoffgehalt in der Schmelze im Bereich von 1 bis 80 Gew.-% liegt.

## Claims

1. Process for producing, from a crystallizable thermoplastic polymer, a biaxially oriented film having one or more layers and having at least one filled layer, in which process
- at least one melt of a homogeneous mixture of the thermoplastic polymer with one or more fillers and also, if desired, other conventional additives is prepared and has a weight ratio of thermoplastic polymer to filler(s) which is intended for the filled polymer film or the layer of a polymer film having more than one layer,
- the melt is extruded through a slot die with formation of a single-layer prefilm or of one of the layers for a prefilm having more than one layer,
- the prefilm having one or more layers is solidified by cooling and is brought to the degree of crystallinity required for the orientation which follows and to a temperature appropriate for the orientation
- and this prefilm is then oriented, in a manner known per se, in longitudinal and transverse directions, with formation of a biaxially oriented polymer film having one or more layers, and this is heat-set and wound up,
**characterized in that** the filled melt is prepared by preparing an unfilled melt of the polymer in an extruder and, while the melt is being conveyed through the extruder, adding the pulverulent filler(s) to the melt.

2. Process according to Claim 1, characterized in that the filled melt is homogenized and extruded using a twin-screw extruder.

3. Process according to Claim 1 and 2, characterized in that the pulverulent filler(s) is added to the polymer melt by means of a powder conveyor of a feed zone of a twin-screw extruder, which zone conveys the polymer melt at atmospheric pressure.

4. Process according to one of the preceding claims, characterized in that the polymer has been selected from the class consisting of crystallizable polypropylene homopolymers and polypropylene copolymers with a proportion of up to 15% by weight of ethylene or of alpha olefins having from 4 to 8 carbon atoms.

5. Process according to one of Claims 1 to 4, characterized in that the fillers have been selected from a class which encompasses the inorganic fillers and pigments calcium carbonate, titanium dioxide, kaolin, talc, barium sulfate, zinc sulfide and mixtures of these.

6. Process according to one of Claims 1 to 5, characterized in that the filler content in the melt is in the range from 1 to 80% by weight.

## Revendications

1. Procédé de production d'un film à une ou plusieurs couches et à orientation biaxiale en un polymère thermoplastique susceptible d'être cristallisé, qui comprend au moins une couche contenant une charge, dans lequel :
- on réalise une masse fondue à partir d'un mélange homogène du polymère thermoplastique avec un ou plusieurs produits de charge ainsi que le cas échéant d'autres additifs habituels, dans lequel le rapport pondéral entre le polymère thermoplastique et la ou les charges est tel qu'on le prévoit pour le film polymère contenant la charge, ou la couche contenant une charge dans un film polymère à plusieurs couches,
- on extrude la masse fondue à travers une buse à fente large en formant un film précurseur monocouche, ou bien une couche pour un film précurseur à plusieurs couches,
- on laisse solidifier par refroidissement le film précurseur à une ou plusieurs couches, et on l'amène au degré de cristallisation nécessaire pour l'étirage ultérieur et à une température appropriée pour cet étirage,
- et on étire ce film précurseur ensuite de manière connue en direction longitudinale et en direction transversale en formant un film polymère à une ou plusieurs couches et à orientation biaxiale, on fixe ce film par voie thermique et on l'embobine,
caractérisé en ce que l'on produit la masse fondue contenant une charge en produisant dans une extrudeuse une masse fondue du polymère exempt de charge, et l'on ajoute à cette masse fondue la ou les charges sous forme de poudre pendant l'alimentation de la masse fondue dans l'extrudeuse.

2. Procédé selon la revendication 1, caractérisé en ce que l'on homogénéise et l'on extrude la masse fondue contenant une charge en utilisant une extrudeuse à double vis.

3. Procédé selon les revendications 1 et 2, caractérisé en ce que l'on ajoute la ou les charges sous forme de poudre à la masse fondue de polymère et au moyen d'un dispositif d'alimentation de poudre dans une zone d'addition d'une extrudeuse à double vis, dans laquelle la masse fondue de polymère est alimentée sans pression.

4. Procédé selon l'une des revendications précédentes, caractérisé en ce que l'on choisit le polymère à partir d'homopolymères de polypropylène ou de copolymères de polypropylène susceptibles d'être cristallisés, comprenant une proportion allant jusqu'à 15 % en poids d'éthylène ou d'oléfine alpha avec 4 à 8 atomes de carbone.

5. Procédé selon l'une des revendications 1 à 4, caractérisé en ce que les produits de charge sont choisis dans un groupe qui comprend les produits de charge inorganiques et les pigments que sont le carbonate de calcium, le dioxyde de titane, le kaolin, le talc, le sulfate de baryum, le sulfure de zinc, ou bien des mélanges de ces produits.

6. Procédé selon l'une des revendications 1 à 5, caractérisé en ce que la teneur en charge dans la masse fondue est dans la plage de 1 à 80 % en poids.
